# EUROPEAN PATENT SPECIFICATION

(11) **EP 2 158 102 B1**
(45) Date of publication and mention of the grant of the patent: **24.07.2013**
(21) Application number: 08779361.8
(22) Date of filing: 09.06.2008
(51) Int. Cl.: B60K 13/02, B60K 13/06

(54) **COMBUSTION AIR INLET AND MOTOR VEHICLE WITH SUCH AN INLET**
VERBRENNUNGSLUFTEINLASS UND KRAFTFAHRZEUG MIT SOLCH EINEM EINLASS
ORIFICE D'ASPIRATION D'AIR DE COMBUSTION ET VÉHICULE À MOTEUR AYANT UN TEL ORIFICE D'ASPIRATION

(30) Priority: 13.06.2007 SE 0701420
(43) Date of publication of application: 03.03.2010
(73) Proprietor: Scania CV AB (PUBL), 151 87 Södertälje (SE)
(72) Inventor: WIKSTRÖM, Hans, S-121 43 Johanneshov (SE)
(86) International application number: PCT/SE2008/050679
(87) International publication number: WO 2008/153487

(56) References cited:
- FR-A- 1 088 435
- US-A- 4 878 555
- US-A- 4 971 172
- US-A- 5 794 733
- US-A1- 2003 160 472
- US-A1- 2003 188 902

## Description

### TECHNICAL FIELD

The invention relates to a combustion air intake for a motor vehicle with an air deflector adapted to guiding round an outer curved corner section of the vehicle an air stream running in a direction opposite to that of movement of the vehicle which air intake has an inlet aperture adapted to being delineated in the corner section and facing away from the direction of movement in order to divert a portion of the flow as combustion air into the air intake. The invention also relates to a motor vehicle provided with such an air intake.

### BACKGROUND

Combustion air intakes for motor vehicles are usually situated inside the vehicle to minimise the ingress of foreign particles such as rain, snow and sand into the engine's intake ducts and thereby avoid frequent air filter changes. Owing to the large air requirements and large suction forces of, in particular, turbocharged engines, however, it is difficult to prevent warmed air from the engine space being drawn into the air intake and thereby impairing the engine's performance and increasing the content of environmentally harmful emissions.

US 4 878 555 A refers to an air intake device for a vehicle engine according to the preamble of claim 1 wherein an air intake passage is provided on the upper surface of a front fender covering a wheel on a vehicle body, and an air induction port is opened in one wall constituting the air intake passage. The object is to prevent, particulates such as mud, dust, snow or the like to enter the air intake passage.

### SUMMARY OF THE INVENTION

An object of the invention is therefore to provide an air intake of the kind indicated in the introduction which is situated outside the vehicle and at the same time makes it possible to minimise the content of foreign particles in the combustion air drawn into the air intake.

According to the invention as defined by the features of claim 1, the inlet aperture is divided into a plurality of successive aperture elements. Each aperture may then be provided with a smaller cross-section without hindering the total inflow of combustion air. This also reduces the risk of larger foreign objects being drawn into the air intake, particularly when the vehicle is stationary with the engine running.

If the inlet aperture is delineated in an orifice element which can be connected at a recess in said corner section, the air intake can be fitted as a separate unit to the vehicle.

The corner section may also comprise, however, a corner panel which can be connected to the vehicle. The air deflector may then be integrated with the corner panel and possibly also with the orifice element. This may facilitate the assembly work.

Each inlet aperture may further be configured like a gill aperture.

Other objects, features and advantages of the invention may be indicated by the claims and the description of embodiment examples set out below.

### BRIEF DESCRIPTION OF THE DRAWINGS

FIG. 1 is a side view of a cutaway front portion of a vehicle cab with an air deflector and a combustion air intake according to the invention;
FIG. 2 is a schematic sectional view from above of a cutaway corner section of a vehicle cab provided with an air deflector and a combustion air intake;
FIG. 3 is a view on a larger scale approximately corresponding to FIG. 2;
FIG. 4 is a view corresponding to FIG. 3 of an alternatively configured air deflector according to the invention; and
FIG. 5 is a view corresponding to FIG. 3 of deflector.

Items with similar functions are denoted by the same reference numerals throughout the various drawings.

### DETAILED DESCRIPTION OF EMBODIMENT EXAMPLES

The front portion of a motor vehicle 10 depicted in the drawings is provided in a conventional manner with an air deflector 20 which, at a distance from an outer curved corner section 14 of the vehicle 10, delineates a curved passage or duct 22 in between. The air deflector 20 may in its simplest form comprise a single curved screen connected to the corner section 14, but in the embodiment examples depicted it is integrated with the corner section 14 in order to provide the duct 22 with an at least partly closed cross-section.

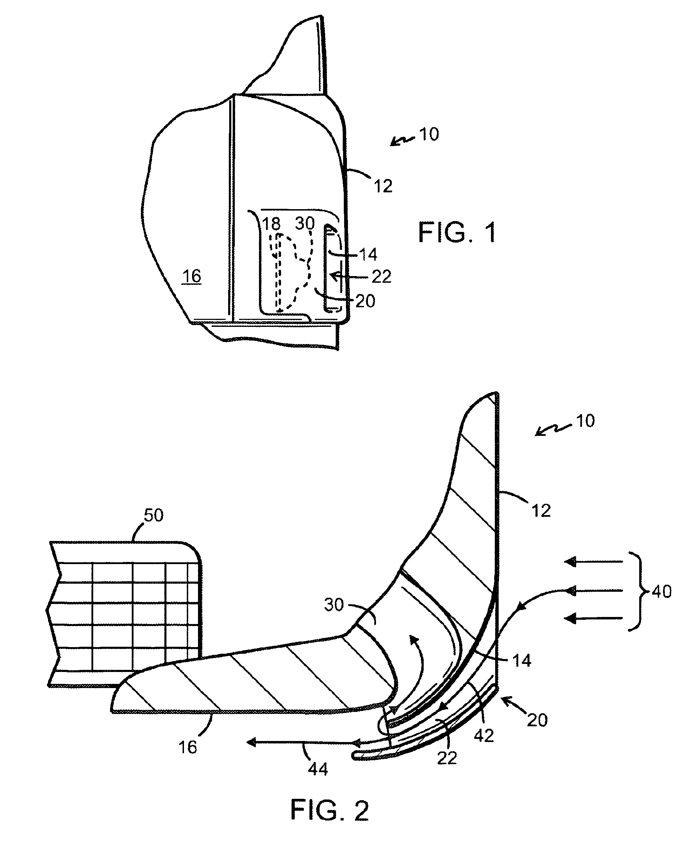

As illustrated in more detail in FIG. 2, the air deflector 20 is intended, when the vehicle 10 is in motion, to guide round the corner section 14 to an outside 16 of the vehicle a flow 42 from an air stream 40 running towards a front 12 of the vehicle. The normal function of the air deflector 20 is to provide an outflow 44 of the flow 42 via the air deflector 20 to prevent the outside 16 from being soiled by splash from an adjacent vehicle wheel 50.

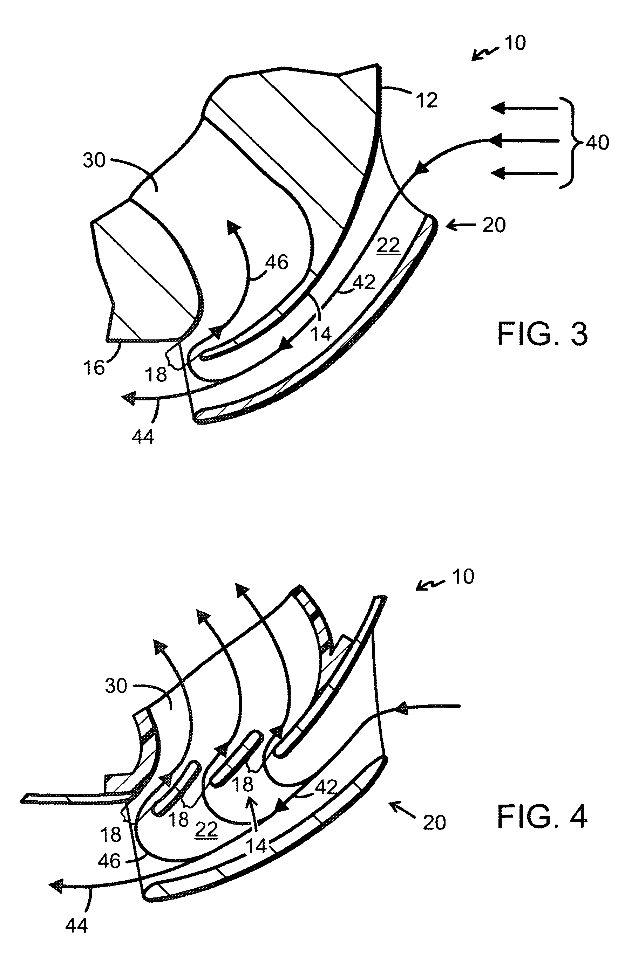

As illustrated in more detail in FIG. 3, the corner section 14 has according to the invention an air intake with an inlet aperture 18 for combustion air to an undepicted combustion engine of the vehicle 10. The inlet aperture 18 communicates with the engine via a line 30 and an undepicted air cleaner. As depicted in FIG. 1, the inlet aperture 18 has the shape of a vertical slit which may extend rectilinearly or curvingly over substantially the whole height of the air deflector 20.

The outside of the inlet aperture 18 further, like a gill aperture, faces at least partly downstream with respect to the flow 42, i.e. away from the direction of movement of the vehicle 10. When the vehicle 10 is in motion, negative pressure in the line 30, caused by the suction effect from the engine, will therefore result in a portion 46 of the flow 42 being diverted into the line 30 via the inlet aperture 18 as combustion air for the engine. The remaining flow 44 will continue along the outside 16 of the vehicle 10.

The curvature of the duct 22 and the diversion of the part-flow 46 result in an appropriate cyclone effect whereby solid particles are separated both from the flow 42 in the air deflector 20 and from the diverted part-flow 46 before it enters the inlet aperture 18.

To prevent larger foreign objects such as insects, cigarette butts etc. from being drawn into the line 30, particularly when the vehicle 10 is stationary with the engine running, the inlet aperture 18 may possibly be covered by an undepicted grille. The slitlike inlet aperture 18 may, however, also be so narrow that it needs no such grille.

As illustrated by the embodiment depicted in FIG. 4, the air intake has plurality of successive inlet apertures 18 delineated between mutually separate screen elements of the corner section 14. The screen elements may partly overlap one another so that the outsides of the inlet apertures 18 face rearwards to a desired extent in the duct 22. In that case, the inlet apertures 18 may take the form of gill apertures integral with the corner section 14.

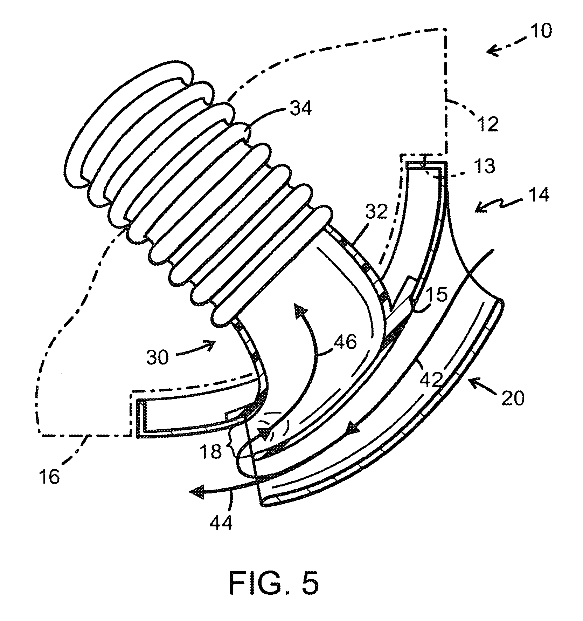

The embodiment in FIG. 5 illustrates the possibility of having the air intake with the inlet aperture 18 and the air deflector 20 integrated or preassembled on a separate part in the form of a corner panel 14 which can be connected at a recess 13 in the vehicle 10. In that case the line 30 may take the form of an initial streamlined orifice element 32 made of, for example, injection moulded plastic material, and a flexible hose 34 which in a manner not depicted in more detail extends to the engine's air cleaner. The orifice element 32 is depicted as a separate component for integrated fastening in a recess 15 of the corner section 14 but may also conceivably be formed integrally with the corner section 14 and/or with the air deflector 20.

The description set out above is primarily intended to facilitate comprehension and no limitations of the invention are to be inferred therefrom. The modifications which will be obvious to one skilled in the art from perusing the description can be implemented without departing from the concept of the invention or the scope of the claims set out below.

## Claims

1. A combustion air intake for a motor vehicle (10) with an air deflector (20) adapted to guiding round an outer curved corner section (14) of the vehicle a flow (42) of an air stream (40) running in a direction opposite to that of movement of the vehicle which air intake has an inlet aperture (18) adapted to being delineated in the corner section (14) and facing away from the direction of movement in order to divert a portion (46) of the flow (42) as combustion air into the air intake, ***characterised* in that** the inlet aperture (18) is divided into a plurality of successive inlet apertures (18) and has an elongate slitlike cross-section.

2. An air intake according to claim 1, in which the inlet aperture (18) is delineated in an orifice element (32) connectable at a recess (15) in said corner section (14).

3. An air intake according to claim 1 or 2, in which the corner section comprises a corner panel (14) connectable to the vehicle (10).

4. An air intake according to claim 3, in which said air deflector (20) is integrated with the corner panel (14).

5. An air intake according to any one of claims 2-4, in which said air deflector (20) is integrated with the orifice element (32).

6. An air intake according to any one of the foregoing claims, in which the inlet aperture (18) is connectable to a line (30) for the combustion air.

7. An air intake according to any one of the foregoing claims, in which the inlet aperture (18) is configured like a gill aperture.

8. A vehicle (10) provided with an air intake according to any one of the foregoing claims.

## Patentansprüche

1. Verbrennungslufteinlass für ein Kraftfahrzeug (10) mit einem Luftumleiter (20), der dazu eingerichtet ist, um einen Fluss (42) eines Luftstroms (40), der in einer der Bewegungsrichtung des Fahrzeugs entgegengesetzten Richtung fließt, um einen äußeren gekrümmten Eckabschnitt (14) des Fahrzeugs zu leiten, wobei der Lufteinlass eine Einlassöffnung (18) aufweist, die dazu eingerichtet ist, in dem Eckabschnitt (14) begrenzt zu sein und von der Bewegungsrichtung weggerichtet zu sein, um einen Teil (46) des Stroms (42) als Verbrennungsluft in den Lufteinlass umzuleiten,
**dadurch gekennzeichnet, dass** die Einlassöffnung (18) in mehrere aufeinanderfolgende Einlassöffnungen (18) aufgeteilt ist und einen länglichen spaltartigen Querschnitt aufweist.

2. Lufteinlass nach Anspruch 1, in dem die Einlassöffnung (18) in einem Mündungselement (32) begrenzt ist, das an eine Ausnehmung (15) in dem Eckabschnitt (14) verbindbar ist.

3. Lufteinlass nach Anspruch 1 oder 2, in dem der Eckabschnitt ein mit dem Fahrzeug (10) verbindbares Eckelement (14) aufweist.

4. Lufteinlass nach Anspruch 3, in dem der Luftumleiter (20) in dem Eckelement (14) integriert ist.

5. Lufteinlass nach einem der Ansprüche 2-4, in dem der Luftumleiter (20) in dem Mündungselement (32) integriert ist.

6. Lufteinlass nach einem der vorhergehenden Ansprüche, in dem die Einlassöffnung (18) mit einer Leitung (30) für die Verbrennungsluft verbindbar ist.

7. Lufteinlass nach einem der vorhergehenden Ansprüche, in dem die Einlassöffnung (18) als eine Grillöffnung konfiguriert ist.

8. Fahrzeug (10), an dem ein Lufteinlass nach einem der vorhergehenden Ansprüche vorgesehen ist.

## Revendications

1. Entrée d'air de combustion pour un véhicule automobile (10), comportant un déflecteur d'air (20) apte à guider le long d'une section d'angle extérieur arrondi (14) du véhicule un flux (42) d'un courant d'air (40) qui s'écoule dans un sens inverse de celui du mouvement du véhicule, laquelle entrée d'air présente une ouverture d'entrée (18) adaptée pour être formée dans la section d'angle (14) et qui se dirige en sens inverse de la direction du mouvement afin de renvoyer une partie (46) du flux (42) en tant qu'air de combustion dans l'entrée d'air, **caractérisée en ce que** l'ouverture d'entrée (18) est divisée en une pluralité d'ouvertures d'entrée successives (18) et présente une section transversale allongée en forme de fente.

2. Entrée d'air selon la revendication 1, dans laquelle l'ouverture d'entrée (18) est formée dans un élément à orifice (32) pouvant être raccordé au niveau d'un évidement (15) formé dans la section d'angle (14).

3. Entrée d'air selon la revendication 1 ou 2, dans laquelle la section d'angle comprend un panneau d'angle (14) pouvant être assemblé au véhicule (10).

4. Entrée d'air selon la revendication 3, dans laquelle ledit déflecteur d'air (20) est intégré au panneau d'angle (14).

5. Entrée d'air selon une quelconque des revendications 2 à 4, dans laquelle ledit déflecteur d'air (20) est intégré à l'élément à orifice (32).

6. Entrée d'air selon une quelconque des revendications précédentes, dans laquelle l'ouverture d'entrée (18) peut être raccordée à un conduit (30) destiné à l'air de combustion.

7. Entrée d'air selon une quelconque des revendications précédentes, dans laquelle l'ouverture d'entrée (18) est configurée comme une ouverture à ailettes.

8. Véhicule (10) équipé d'une entrée d'air selon une quelconque des revendications précédentes.
